# EUROPEAN PATENT APPLICATION

(11) **EP 4 102 427 A1**
(43) Date of publication of application: **14.12.2022**
(21) Application number: 22177597.6
(22) Date of filing: 07.06.2022
(51) Int. Cl.: G06Q 10/06

(54) **RESOURCE PLANNING WITH INCOMPLETE INFORMATION**

(30) Priority: 07.06.2021 US 202163197973 P
(71) Applicant: The Boeing Company, Chicago, IL 60606-2016 (US)
(72) Inventor: WOJCIECHOWSKI, Adam, Göteborg (SE); NILSSON, Simon Frederik, Göteborg (SE); EKH, Pontus, Göteborg (SE); SLABANJA, Mattias, Göteborg (SE)
(74) Representative: Boult Wade Tennant LLP

(57) **Abstract**

Resource planning with incomplete information is provided by updating tentative vacancies for roles in an assignment plan; evaluating the assignment plan based on simulated bids for resources to fill the tentative vacancies; in response to determining that the simulated bids fulfill the assignment plan according to an assignment threshold, publishing the tentative vacancies as actual vacancies for actual bids; receiving actual bids from at least a portion of the resources; evaluating the assignment plan based on the actual bids; and in response to determining that the actual bids fulfill the assignment plan, publishing a update plan based on the actual bids as awarded to the resources.

## Description

### FIELD

The present disclosure relates to improving computational speed and efficiency in identifying solutions to combinatorial problems.

### BACKGROUND

Combinatorial problems involve finding a grouping, ordering, or assignment of a discrete, finite set of objects that satisfies a given set of conditions. In combinatorial problems, exhaustive search for an optimal solution is generally not tractable by powerful computing equipment, much less by the human mind. Resource planning is a type of combinatorial problem for which optimization techniques remain elusive. For example, when presented with a number of tasks and a set of resources to complete those tasks, handling the assignment of resources to tasks can be subject to exponential increases in complexity as the number of tasks and resources increase or as the rules or constraints for how to assign those resources to tasks increase. Identifying one or more solutions that "best" assign resources to tasks according to the rules can use significant computing resources and/or significant amounts of time. Additionally, assignments can be especially difficult to compute when the information about the resources and tasks for combinational optimization is incomplete (e.g., not knowing how many resources are available for assignment, not knowing the demand for tasks, not knowing the rules for forming the assignments, etc.).

These assignments can be further complicated by the desire to not only efficiently assign individual resources to the tasks, but to also handle the add-on effects of an assignment. These add-on effects can include a cascading assignment/vacancy chain (e.g., where reassigning a first resource from a first task to a second task creates an opening in the first task that for which a second resource must be found), and potential teaming in reassigning/upgrading resources from one assignment to another assignment (e.g., when assigning a first resource to a first task and a second resource to a second task as a set is more efficient than individually assigning the first and second resources to the first and second tasks).

### SUMMARY

The present disclosure provides a method; a system comprising a memory storing computer-executable instructions and a processor configured to execute the computer-executable instructions and cause the system to perform a method; a non-transitory computer-readable medium comprising computer-executable instructions that, when executed by a processor of a computing system, cause the computing system to perform a method; and computer program product embodied on a computer readable storage medium comprising code for performing a method, the method including: updating tentative vacancies for roles in an assignment plan; evaluating the assignment plan based on simulated bids for resources to fill the tentative vacancies; in response to determining that the simulated bids fulfill the assignment plan according to an assignment threshold, publishing the tentative vacancies as actual vacancies for actual bids; receiving actual bids from at least a portion of the resources; evaluating the assignment plan based on the actual bids; and in response to determining that the actual bids fulfill the assignment plan, publishing a update plan based on the actual bids as awarded to the resources.

Optionally, the tentative vacancies are a result of one or more of: an additional role being added to a pool of roles; and a resource leaving a pool of resources.

Optionally, the assignment plan is evaluated based on a probabilistically generated set of simulated bids based on historically observed bidding patterns.

Optionally, the assignment plan is evaluated over several iterations, where the set of simulated bids is adjusted probabilistically for each iteration.

Optionally, evaluating the assignment plan includes performing an award script that follows priority rules when awarding a vacancy between competing resources.

Optionally, before determining that the simulated bids fulfill the assignment plan, the method further includes determining in an earlier iteration that the simulated bids do not fulfill the assignment plan, and in response to determining that the simulated bids in the earlier iteration do not fulfill the assignment plan: updating the tentative vacancies for the roles in the assignment plan based on the earlier iteration; and evaluating the assignment plan based on the simulated bids for resources to fill the tentative vacancies as updated.

Optionally, before determining that the actual bids fulfill the assignment plan, the method further includes: determining in an earlier iteration that the actual bids do not fulfill the assignment plan, and in response to determining that the actual bids in the earlier iteration do not fulfill the assignment plan: updating the assignment plan by removing at least one of the actual vacancies based on the earlier iteration; and evaluating the assignment plan based on the actual bids for resources to fill the actual vacancies as updated.

Optionally, determining that the actual bids fulfill the assignment plan includes: identifying competing bids from at least two resources for a plurality of update paths; reading the competing bids for priority keys that identify preferences and priorities for associated resources of the at least two resources for individual update paths of the plurality of update paths; and determining an update order for the at least two resources via the update paths that respects the preferences and priorities associated with the priority keys.

The present disclosure provides a method; a system comprising a memory storing computer-executable instructions and a processor configured to execute the computer-executable instructions and cause the system to perform a method; a non-transitory computer-readable medium comprising computer-executable instructions that, when executed by a processor of a computing system, cause the computing system to perform a method; and computer program product embodied on a computer readable storage medium comprising code for performing a method, the method including: identifying competing bids from at least two resources for a plurality of update paths; reading the competing bids for priority keys that identify preferences and priorities for associated resources of the at least two resources for individual update paths of the plurality of update paths; determining an update order for the at least two resources via the update paths that respects the preferences and priorities associated with the priority keys; and releasing an update plan scheduled according to the update order.

Optionally, the competing bids are for a vacancy in a given role different from current roles that the at least two resources are currently assigned to.

Optionally, the method further includes verifying that an order of reassignment from the current roles to the given role respects a priority order for the at least two resources.

Optionally, the competing bids are for update-inputs for reassignment to a new role that the at least two resources are scheduled for reassignment to.

Optionally, a first resource specifies a first priority and a second resource specifies a second priority, lower that the first priority, further comprising: applying an offset to the first priority for a subset of available times for reassignment; wherein the offset is set to one of: equal to a lowest priority among the at least two resources when the first resource remains viable for consideration for reassignment during the subset of available times but at a lower priority than the second resource; and equal to a priority threshold when the first resource is not viable for consideration for reassignment during the subset of available times.

Optionally, the resources are electrical generators.

The present disclosure provides a method; a system comprising a memory storing computer-executable instructions and a processor configured to execute the computer-executable instructions and cause the system to perform a method; a non-transitory computer-readable medium comprising computer-executable instructions that, when executed by a processor of a computing system, cause the computing system to perform a method; and computer program product embodied on a computer readable storage medium comprising code for performing a method, the method including: determining an assignment plan that identifies vacancies or surpluses for roles; creating simulated bids for reassigning resources according to the assignment plan; running an award script based on the simulated bids to probabilistically assign a first portion of the resources to new roles of the roles using a priority scheme to resolve competition between the first portion of the resources for the new roles; in response to a first output of the award script satisfying a confidence threshold, finalizing the assignment plan; posting the vacancies for the new roles according to the finalized assignment plan; receiving actual bids from a second portion of the resources for the new roles; running the award script based on the actual bids to assign the second portion of the resources to the new roles for an update plan; and in response to a second output of the award script satisfying a release threshold, publishing the update plan.

Optionally, the method further includes, before the first output satisfies the confidence threshold, optimizing the assignment plan via multiple iterations of identifying the vacancies or the surpluses to include in the assignment plan based on previous creation of simulated bids and running of the award script.

Optionally, the method further includes, before the second output satisfies the release threshold, optimizing the update plan via multiple iterations of running of the award script using the actual bids, wherein at least one vacancy of the vacancies or at least one surplus of the surpluses is removed for a subsequent iteration of running the award script.

Optionally, the simulated bids are generated probabilistically based on historical bidding patterns for the resources in current roles for the new roles.

Optionally, the surpluses for the new roles identify one or more roles to remove in the assignment plan.

Optionally , running the award script identifies cascading vacancies when a first resource fills a first vacancy in a first new role and creates a second vacancy for a second resource to fill, and wherein the second vacancy is in an original role for the first resource and is a second new role for the second resource.

### BRIEF DESCRIPTION OF THE DRAWINGS

So that the manner in which the above-recited features can be understood in detail, a more particular description, briefly summarized above, may be had by reference to examples, some of which are illustrated in the appended drawings.
Figures 1A-1D illustrate a resource assignment space during various assignment update activities.
Figure 2 is a flowchart of a method for a cascading assignment planner to handle incomplete planning information during a role update.
Figure 3 illustrates an architecture for a resource scheduler, including a cascading assignment planner.
Figure 4 is a flowchart of a method for generating a reassignment plan.
Figure 5 illustrates role reassignment combinable updates.
Figures 6A and 6B illustrate competing reassignment between two resources to a role.
Figure 7 is a flowchart of a method for applying priority keys for resource assignment planning.
Figure 8 illustrates a computing device.

### DETAILED DESCRIPTION

The present disclosure provides a cascading assignment planner with improved computational speed and efficiency. The cascading assignment planner may be used in forecasting resource posting vacancies, shifted resource assignments, and upgrading activities (and scheduling) to realize the resource assignments according to various upgrade schedules and rule sets when incomplete or unreliable information is present. The cascading assignment planner described herein forecasts not only the demand variables, but the supply variables, according to a set of rules to identify what vacancies are expected to result in cascading new vacancies and how those vacancies are expected to be filled before opening the assignment process to live assignments. Additionally, as the live assignments require various upgrade resources to perform, and the cascading assignment planner can identify how to best schedule the upgrades. Beneficially, the described cascading assignment planner is able to arrive at the best assignments faster and more reliably and using fewer computing resources (e.g., less memory, lower power, fewer clock cycles, etc.) with an incomplete data set to thereby improve the functionality of the computing devices used in analyzing resource-to-task assignments.

Although the examples given in the present disclosure generally relate to the assignment of crew schedules (as the resources) to aircraft roles (as the roles) according to seniority rules, training/certification, (as the rule set), according to expressed individual preferences (as the bids), the present disclosure can be applied in various fields.

For example, a cascading assignment planner can be used in reassigning computing resources in a data center as the resources age, so that when an old or malfunctioning unit is taken offline, the newest, fastest, or most reliable devices are assigned for computing tasks with a highest priority level, while other devices are shifted to lower priority computing tasks. Accordingly, a replacement device does not need to be slotted into the same tasks as the removed device, but a more suitable device is reassigned to the role held by the removed device.

In other examples, a cascading assignment planner can be used to determine what power generating units to bring online or take offline, and which to upgrade (and when), to handle demand from a power grid. Because power demand is variable (e.g., based on weather patterns), knowing when to take a plant offline for maintenance and upgrades or when to bring a plant online to meet that demand is based on imperfect or incomplete information, which is affected by what other plants are online or offline.

Additionally, although generally described as "upgrading" resource assignments, what constitutes an "upgrade" can vary according to different rule sets or definitions, and thus any update to a resource can be considered an "upgrade". For example, a pilot may "upgrade" from a junior position to a senior position, from a senior position to a junior position (e.g., with a preferred base of operations, preferred work schedules), or from one position to an equivalent position (e.g., from a first base of operations to a second base of operations). In other examples, an upgrade path for a computer server may include capacity enhancements (e.g., a larger hard drive, a new processor, more memory) or transitioning the device to a more mature role (e.g., a less speed-intensive computing task, a task with lower guaranteed uptime or otherwise "downgrading" the tasks assigned to the resource). Accordingly, an "upgrade" may be understood to refer to an update in resource and role assignment to meet a changing demand profile for the resources.

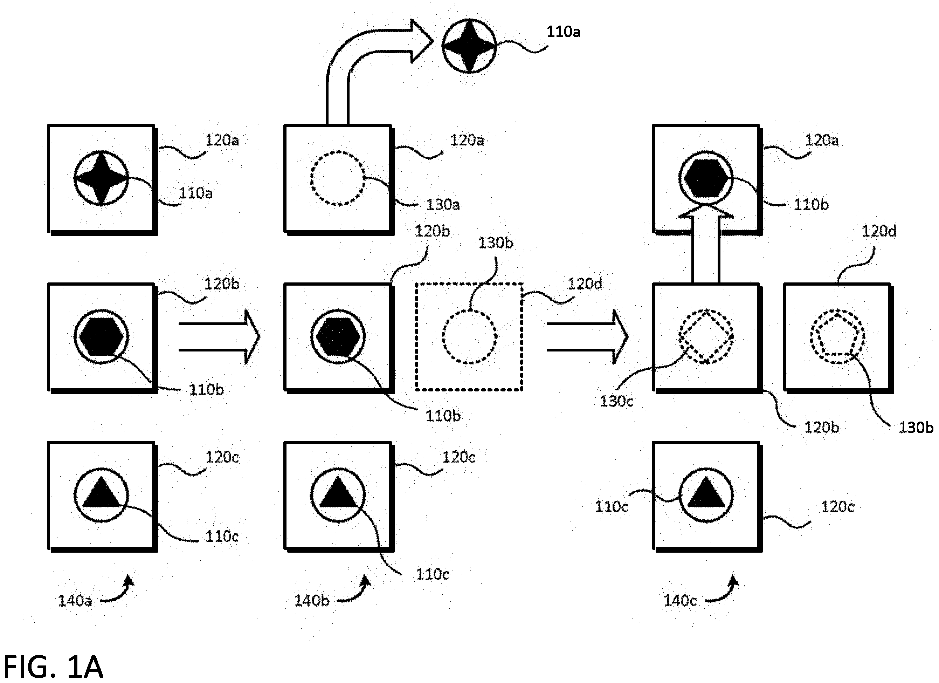

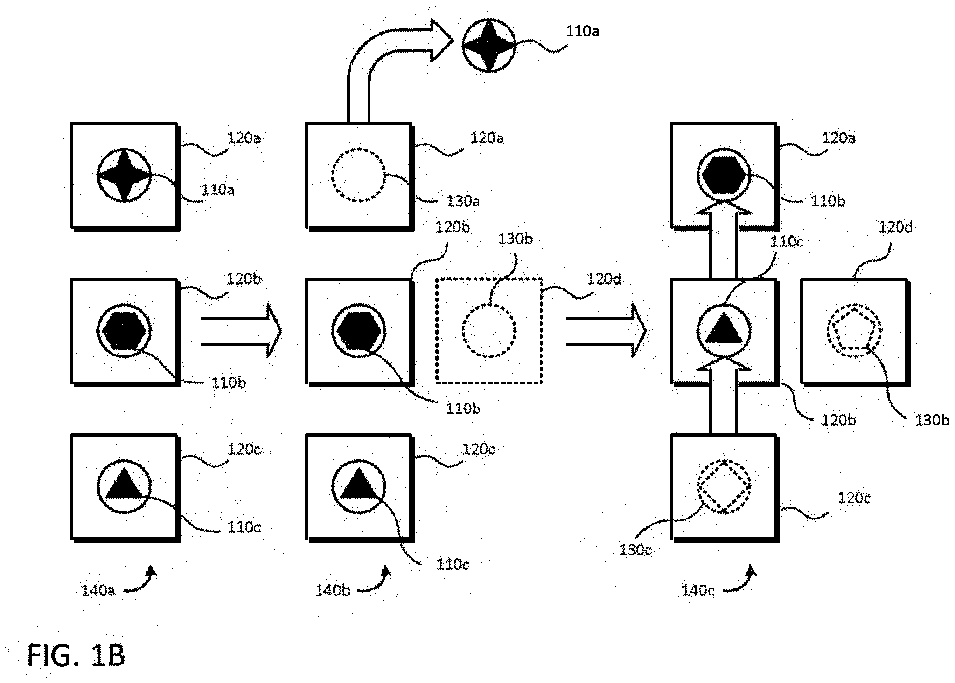

Figures 1A-1D illustrate a resource assignment space during various assignment update activities, according to an example of the present disclosure. In each of the illustrated assignment spaces, various resources 110a-e (generally or collectively, resources 110) are assigned to various roles 120a-d (generally or collectively, roles 120), which change over the course of the upgrade due to various vacancies 130a-d (generally or collectively, vacancies 130). In each of Figure 1A and 1B, an initial resource assignment 140a (generally or collectively, resource assignment 140) shows a first resource 110a assigned to a first role 120a, a second resource 110b assigned to a second role 120b, and a third resource 110c assigned to a third role 120c.

As used herein, the resources 110 indicate the individual personnel or equipment that are assigned to a role 120. For example, John Doe, Ivan Ivanovich, and Erika Mustermann are flight crew (e.g., resources 110) who can be trained to fulfill different roles 120 of pilot or co-pilot of various airframes (e.g., type X, Y, or Z aircraft). In other examples, a first computer, a second computer, and a third computer are computing devices (e.g., resources 110) that can be configured to fulfill different roles 120 of email server, document management server, personal computing device, etc. In other examples, a first generator, a second generator, and a third generator (e.g., resources 110) can be staged to fulfill different roles 120 of baseload power provision, peak demand supplemental power provision, load balancing power provision, and backup power provision. Other examples of resources 110 and roles 120 are possible and contemplated by the present disclosure.

In Figures 1A-1D, each of the first through third roles 120a-c are illustrated as different classes of roles that the resources 110 can transition between. For example, for the first role 120a can be defined as "pilot aircraft of type X", the second role 120b as "pilot aircraft of type Y", and the third role as "copilot aircraft of type X", and a pilot who flies aircraft A of type X on Monday, and flies aircraft B of type X on Tuesday, has not transitioned roles 120, nor does the pilot transition to a different role 120 when off duty.

Similarly, in other examples using computing devices as the resources 110, a role 120 defined as "provide virtual machines to users" can assign a given server to that role 120 so that the given server remains in that role 120 regardless of which users are provided virtual machines or when those virtual machines are provided.

Stated differently, assignment to a role 120 is separate from assignment to a task within that role 120. Accordingly, a resource 110 is assigned to a role 120 and then is independently assigned to tasks according to that role 120 based on the demand for that role 120. A reassignment therefore occurs when a resource 110 is placed into a role 120 with a different class or definition, as a resource 110 is assigned to one role 120 at a time. These reassignments can be forecasted based on changing demand for tasks associated with the role 120 (e.g., more email servers are needed, fewer backup generators are needed, etc.), changing resource availability (e.g., a pilot retires leaving a vacancy to fill, changes to a maintenance schedule results in increased equipment downtime, etc.), changing overlap requirements (e.g., increasing generator uptime from 99.9% to 99.99999% uptime, decreasing staffing backup coverage, etc.), or the like.

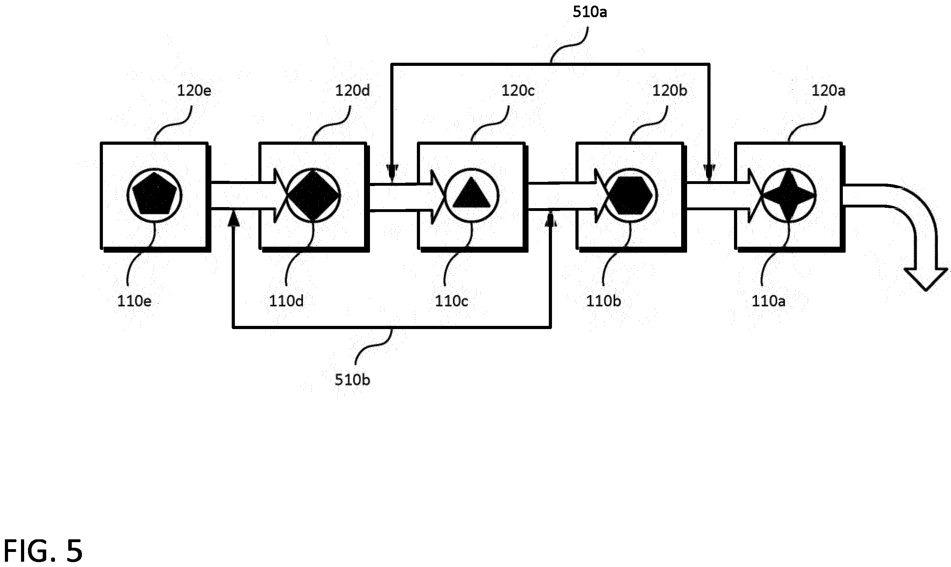

As will be appreciated, role reassignment can be accompanied by trainings for the resource 110 (e.g., to pilot aircraft of type Y instead of type X), hardware updates (e.g., installing additional storage devices for an email server repurposed from a different role 120), software updates (e.g., installing different control suites for a generator in baseload versus load balancing roles 120), which require time, resources, and planning to implement. Various factors to consider when scheduling how and when to initiate a role reassignment are discussed in greater detail in regard to Figures 5, 6A-6B, and 7.

Although discussed herein primarily in terms of function, the roles 120 can also specify various deployments or locations. Accordingly, a first role 120a and a second role 120b can both be for the same function, but for different locations. For example, a first role 120a and a second role 120b can both be for aircraft type X captain, but at airport A and airport B, respectively. In other examples, a first role 120a and a second role 120b can both be for base load generators, but at airport site A and site B, respectively.

In Figures 1A and 1B, a second resource assignment 140b shows that when a first resource 110a leaves the first role 120a (e.g., when a pilot retires, when a power plant is taken offline, when a computer malfunctions), the first role 120a still needs to have a resource 110 assigned thereto, resulting in a first vacancy 130a. Similarly, if a fourth role 120d is added to the second resource assignment 140b from the initial resource assignment 140a, a fourth vacancy 130d is created. As illustrated, the second role 120b and the fourth role 120d are arranged to be two instances of one role class (e.g., two pilot positions for a given airframe, two power output types for generators, two task types for a computer).

Depending on whether and how the existing resources 110 are reassigned to the roles 120 to fill the vacancies 130, new vacancies 130 may be opened and subsequently filled with different resources 110. For example, Figures 1A and 1B show in the third resource assignment 140c that the second resource 110b is reassigned to the first role 120a, thus filling the first vacancy 130a and creating a third vacancy 130c in the second role 120b.

Because the resources 110 can transition for a variety of reasons from one role 120 to another role 120, the update path when a vacancy 130 occurs in a role 120 is not always linear and is unknown when planning for the vacancies 130. In the example illustrated in Figure 1A, the third resource 110c remains assigned to the third role 120c, thus leaving two vacancies 130 in the role class of the second role 120b and the fourth role 120d. However, as shown in Figure 1B, the third resource 110c can backfill the first vacancy 130a left in the second role 120b (by the second resource 110b being reassigned to the first role 120a), thus leaving a second vacancy 130b in the fourth role 120d and a third vacancy 130c in the third role 120c.

When an assignment planner has incomplete control over the resources 110, various potential different role reassignments result in incomplete planning information. For example, pilots (as resources 110) can voluntarily submit bids to take a different role 120 (or remain in a current role 120 by not submitting a bid), and an assignment planner cannot force a pilot to take a different role 120 than the currently held role 120. In other examples, an assignment planner cannot reassign an email server to be a document management server without also identifying a new email server and making various hardware and software changes. In further examples, an assignment planner may be limited as to when to reassign a generator from one role to another based on maintenance schedules, operation schedules, and mechanical lifetimes of the individual generators as resources 110.

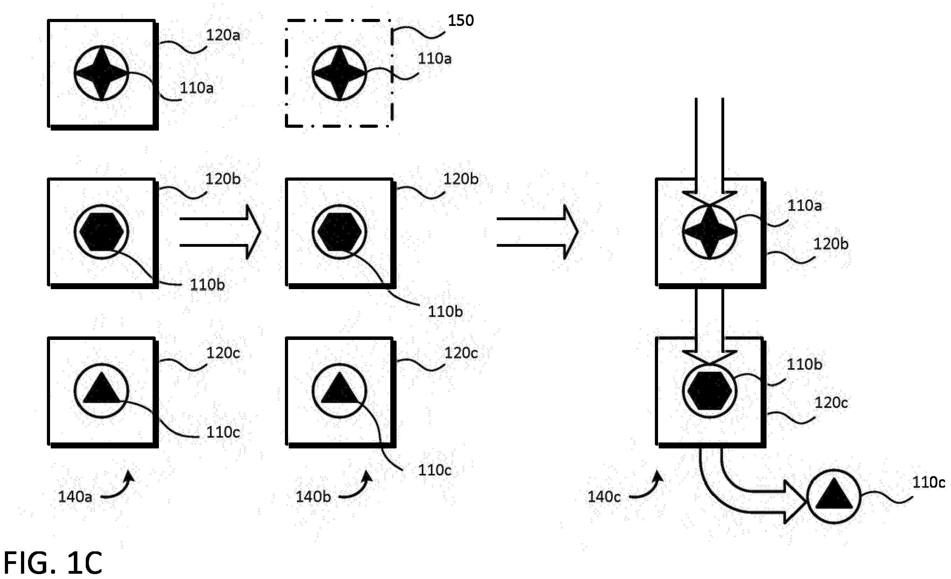

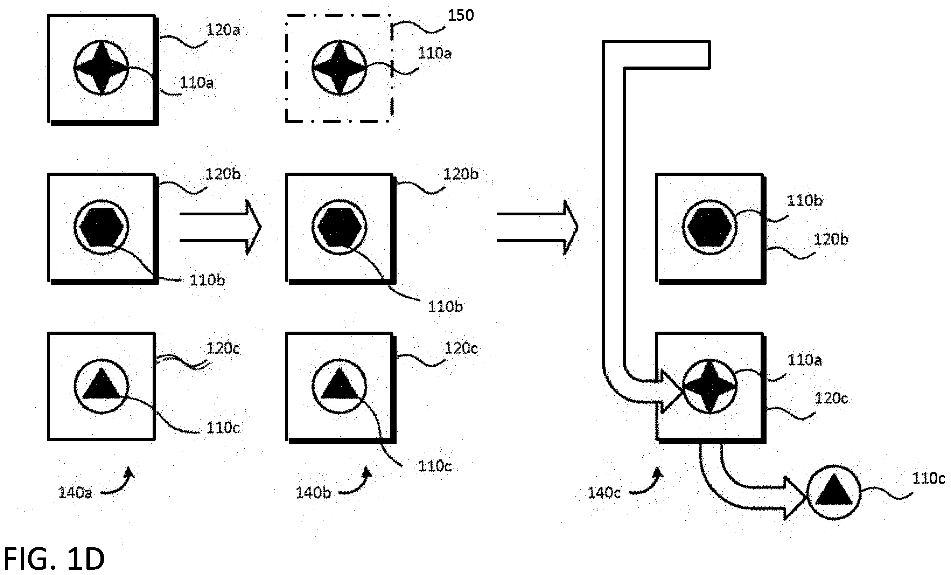

Additionally, when a role 120 is removed, as in Figures 1C and 1D, the reassignment of resources 110 with higher priorities to different roles 120 can cause further complications in predicting how the assignment of roles 120 will play out. For example, when a flight is removed from a schedule, when a power plant is shifted to a lower power demand profile, when a computing resources are shifted to different use cases, a first role 120a can be removed, resulting in a surplus 150 that is not retained in the third resource assignment 140c. Depending on resource retention policies, when a first resource 110a is assigned to a surplus 150, an operator may seek to shift that first resource 110a to an existing role 120, which can force other resources 110 out of the respective roles 120 to make room for the retained and reassigned first resource 110a.

In Figure 1C for example, the first resource 110a can be reassigned to the second role 120b, causing the second resource 110b to be reassigned to the third role 120c, leaving the third resource 110c unassigned (assuming no new roles are created). However, depending on the retention policies, the first resource 110a could bid for or be reassigned to the third role 120c instead as in Figure 1D; leaving the second resource 110b assigned to the second role 120b, but still leaving the third resource unassigned. Both reassignment scenarios can be viable, but result in different assignments in the third resource assignment 140c, and can require different role-updating inputs to be expended to transition the resources 110 from the initial resource assignment 140a to the third resource assignment 140c.

Accordingly, when incomplete control results in incomplete planning information, any of the role reassignments shown in Figures 1A-1D are possible (as well as various other potential updated role assignments not illustrated). An assignment planner may need to plan around these different contingencies to ensure a correct number of roles 120 are planned for, that the corresponding resources 110 are assigned to those roles 120, and that sufficient role-updating inputs are available to transition the resources 110 to the new roles 120.

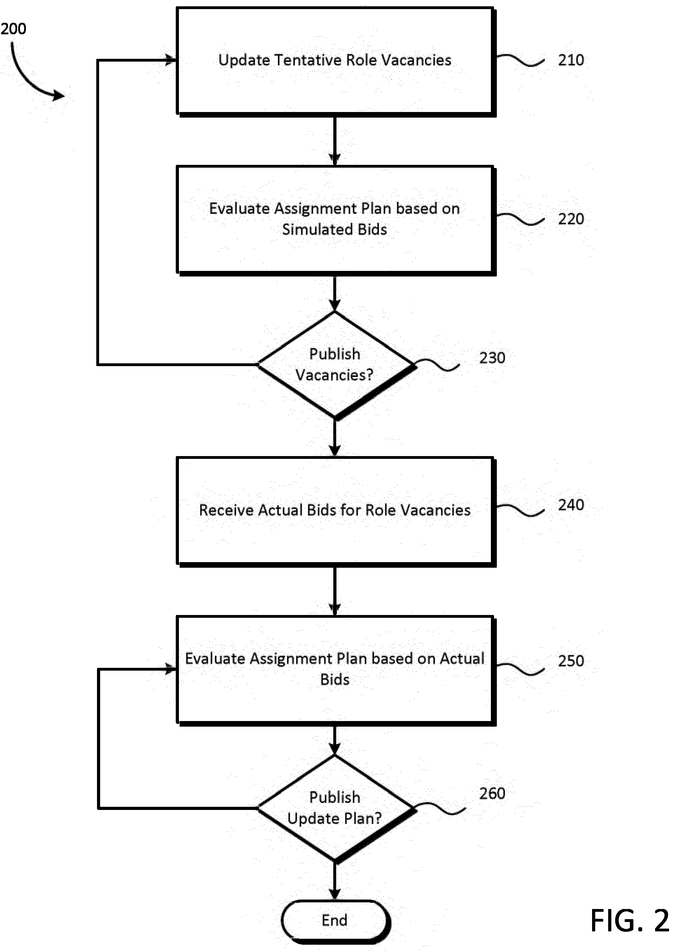

Figure 2 is a flowchart of a method 200 for a cascading assignment planner to handle incomplete planning information during a role update, according to an example of the present disclosure. Method 200 describes a two-part methodology, where the cascading assignment planner simulates one or more rounds of reassignments before posting a set of vacancies to adjust the resource assignment.

The assignment plan identifies the number of positions in each role that are planned for meeting future operational demands, and includes postings of vacancies and surpluses to allow resources to shift to new roles. In various examples, the cascading assignment planner sets the number of vacancies and surpluses so that each of the given roles has sufficient capacity to meet operational demand, but not too much capacity that resources are idle beyond a rest, repair, or coverage threshold. To adjust how resources shift to new roles, the cascading assignment planner can adjust whether a given vacant role is posted (e.g., allowing new bids to be submitted therefor) or unposted (e.g., allowing standing bids to backfill a vacancy created via cascade) or a given surplus is posted (e.g., identifying a resource to bid-out of the role) or unposted (e.g., denying standing bids from backfilling a cascaded vacancy or not creating a vacancy when the existing resource bids out of the role). In various examples, the cascading assignment planner can add and remove posted vacancies and surpluses between simulated iterations (e.g., per blocks 210-230) but only de-posts posted vacancies in live iterations (e.g., per blocks 240-260).

The update plan identifies which resources are assigned to which roles in the assignment plan, and can identify when and how (e.g., which update-inputs are used) each resource is transitioned from an existing role to the new role. In various examples, the cascading assignment planner analyzes whether the update-inputs are sufficient to execute the transition from the current role assignments to the role assignments in the current assignment plan, and may make adjustments to the assignment plan (e.g., changing which vacancies/surpluses are posted versus un-posted) and which resources are assigned certain update-inputs to transition to new roles.

At block 210, the cascading assignment planner updates tentative role vacancies. The various vacancies can be used to expand, shift, or reduce the number of roles available and types of roles available due to changing operational conditions. For example, an entity may desire to provide a higher level of availability of a first role and may add additional vacancies to the first role class or may add additional vacancies to the first role class and remove role openings in a second role class (e.g. to shift resources to the first role class from the second role class).

However, with incomplete information about whether new resources will need to be found to fill the vacancies (or can be found) or existing resources can be reassigned from one role to another, the cascading assignment planner makes an estimate for how many and which vacancies to post. These tentative vacancies can initially be set by a human user or the cascading assignment planner based on the updated operational conditions, but are adjusted by the cascading assignment planner based on successive iterations of block 210-230 of method 200.

The cascading assignment planner can identify tentative vacancies created by resources bidding for different roles and determine whether to post the vacancies or surplus roles as part of the assignment plan, or allow the vacancies and surplus roles to be naturally accounted for by the movement of resources to different roles. Because the posted vacancies and surplus roles are committed to in the assignment plan, allowing some of the expected vacancies and surplus roles to go un-posted allows the cascading assignment planner greater flexibility in handling role assignment. Standing bids or requests for reassignment can be handled along with new bids to allow for the movement of different resources between roles. However, explicitly posting vacancies or surplus roles can shift how or where availability is changed in the role assignment plan. However, because the cascading assignment planner has no knowledge beforehand (aside from the standing bids) whether a given resource will seek reassignment to a given role (either in response to a vacancy in a "better" role or to a current role being marked as a surplus role), the cascading assignment planner runs several simulations to determine whether the proposed set of vacancies and surpluses are likely to result in acceptable resource balancing across roles before positing a finalized role assignment plan.

At block 220, the cascading assignment planner evaluates the assignment plan based on simulated bids to fill the various role vacancies set for the current iteration (per block 210). The cascading assignment planner uses historic bidding patterns and the currently known standing reassignment bids to probabilistically simulate whether a given role will receive a bid from an existing resource, and whether the resource that fills the vacancy will, in turn, create another vacancy that is probabilistically simulated for how or whether that vacancy will be filled. Similarly, when a role is removed, the cascading assignment planner uses historic bidding patterns and the currently known standing reassignment bids to probabilistically simulate how existing resources will shift among the other roles, potentially displacing other resources and how the displaced resources will cascade to potentially displace other resources.

In various examples, a given resource can bid for zero, one, or several vacancies, and the likelihood that a given resource is bid for reassignment to a given vacancy is independently simulated. For example, a pilot (as a resource) can have an *X*% chance of independently bidding for a first role vacancy and a *Y*% chance of independently bidding for a second role vacancy, and would therefore have an *X** *Y*% chance of independently bidding for both the first and second role vacancies (despite being only able to fulfill one role at a time). Similarly, a given computing device (as a resource) can be suggested to bid to be repurposed to fill a first role vacancy *X*% of the time or to a second role vacancy *Y*% of the time, or both *X** *Y*% of the time. Additionally, resources can submit standing bids so that if a vacancy is created or a role is removed at a future time, the cascading assignment planner can know how that resource is to be handled in the resource assignment plan.

The cascading assignment planner can also consider dependent bids, so that if a given resource bids (or does not bid) for a first vacancy, submitting a bid for another vacancy may be more or less likely. For example, consider a pilot (as a resource) who is probabilistically simulated to independently bid on a vacancy for role A at airport A at *X*%, role A at airport B at Y%, and role B and airport A at *Z*%. If the cascading assignment planner simulates a bid for role A at airport A, the likelihood of also submitting a bid for role A at airport B can different from *X* Y%* (to reflect that pilots often/rarely submit bids for the same role across different airports) and the likelihood of also submitting a bid for role B at airport A can be different from *X* Z*% (to reflect that pilots who submit bids for airport A often/rarely submit bids for other roles at airport A).

Because several resources can bid for a given vacancy, but each vacancy is filled by a single resource, the cascading assignment planner also simulates how to award vacancies between various resources competing for a given vacancy. In some examples, the cascading assignment planner uses a priority scheme for the resources to determine which resource is assigned to the vacancy or existing role (e.g., pilot seniority, time since last device/software upgrade, time until next scheduled maintenance period) or may use a probabilistic assignment when the competing resources are equal according to the priority scheme (or no priority scheme is in place). Because individual vacancies for the same role classification are fungible, resources do not begin competing for vacancies until at least *n*+1 resources are simulated as bidding for the *n* vacancies in a given role.

In various examples, the cascading assignment planner performs several simulated bid/award scenarios using the current role distributions (e.g.,. different sets of explicitly defined role vacancies or surplus roles) to determine how often the assignment plan is filled and created using the available resources and whether the update-inputs are sufficient to perform the update from the current assignment plan to the analyzed assignment plan. For example, due to probabilistically simulating the assignment of various resources to various vacancies, a given role assignment (updated per block 210) may occasionally fulfill the assignment plan but more often not fulfill the assignment plan, (or vice versa). Accordingly, by performing several simulated bid/award scenarios for a given set of role vacancies, the cascading assignment planner can learn how often or what percent of simulations result in fulfilling the role vacancies.

The update-inputs evaluated by the cascading assignment planner include those components, personnel, and facilities used to update a resource from one role to another. For example, update-inputs for pilot resources can include, instructors, flight simulators, and the like, while update-inputs for generators can include technicians, transportation availability (e.g., cranes, trucks, barges, etc., to move a generator from site A to site B), cabling and other hardware availability, control software upgrades, and the like.

At block 230, the cascading assignment planner determines whether to publish the tentative assignment plan as actual vacancies and surplus roles to receive actual bids to fill and react to (versus the simulated bids per block 220). In various examples, the cascading assignment planner determines to publish the vacancies and surplus roles in the assignment plan when a threshold number or percentage of simulated bids (per block 220) meet or exceed the specified updated operational conditions.

In various examples, the cascading assignment planner performs at least *N* simulation iterations (e.g. of blocks 210-230) before determining whether to publish the assignment plan for actual bidding (e.g., per block 240). Additionally, the cascading assignment planner can evaluate whether a threshold percentage of simulated bids meet or exceed the specified updated operational conditions in a rolling window, so that at least *X*% of the last *N* iterations must meet the threshold before determining to proceed to block 240.

When the cascading assignment planner determines to publish the assignment plan, method 200 proceeds to block 240. Otherwise, method 200 returns to block 210 to update the tentative role vacancies and surplus roles to publish and perform another simulated iteration. For example, a first set of role vacancies can be satisfied *X*% of the time, and if *X*% is above the threshold, method 200 proceeds to block 240; otherwise, method 200 returns to block 210 for the cascading assignment planner to formulate a new set of role vacancies that will potentially have a more acceptable level of satisfaction. In various examples, the role vacancies are satisfied when filled by resources currently assigned to roles in the current assignment plan, or by newly acquired resources. Accordingly, determining whether the role vacancies are satisfied at least X% of the time can include an analysis for whether sufficient role update-inputs exist to transition resources between roles.

At block 240, the cascading assignment planner receives actual bids for the published new assignment plan. The published role vacancies are those identified (per block 230) as probabilistically being filled at least a threshold percentage of time, and the actual bids may be received over a period of time (e.g., a bid period) to voluntarily reclassify a given resource from one role to another. The published surplus roles are those identified (per block 230) as being probabilistically not vacated by existing roles in the natural cascade of filling vacancies (posted or left via cascade). For example, if a given role class is reduced from *X* openings to *X*-2 openings, and only one resource initially assigned to the given role class is probabilistically assessed to bid into a different role in a new assignment plan, the cascading assignment planner can publish one (or two) surplus role in the given role class to ensure that *X*-2 resources are assigned to the given role class in the new assignment plan.

At block 250, the cascading assignment planner evaluates the assignment plan based on the actual bids. The cascading assignment planner identifies which resources are awarded the roles indicated in the actual bids, settling any completion for role vacancies based on a priority scheme (including random assignment as a tie-breaker). For example, if two bids are received for a single vacancy, the cascading assignment planner determines which of the bids to award the vacancy to (and which to deny the vacancy to) according to various priority schemes. In addition to the bids received for the posted vacancies and surpluses, the cascading assignment planner uses the standing bids (if any) to shift existing resources into or out of the un-posted cascading vacancies or surpluses that occur due to the reassignment of resources in the assignment plan (see e.g., Figures 1A-1D).

As the actual bids may result in a different number (and type) of cascaded vacancies than were included in the published vacancy plan (e.g., per blocks 230-240), the cascading assignment planner analyzes whether the actual bids fill the posted vacancies and move resources out of surplus role classes and whether the particular resources assigned to the new roles can be transitioned within a given time frame based on the existing update-inputs available to perform the role reassignment. In various examples, the cascading assignment planner is provided with a range for how many roles are to be filled, so that for *N* posted roles in a given category, at least *N-M* of the roles must be filled (e.g., allowing *M* roles to be unfilled while still treating the assignment as complete). For example, a power generator can allow for some redundancy in the number of load balancing generators so that out of two posted vacancies, the power generator will accept having both or only one filled (e.g., *N*=2*, M*=1)*.* However, that same power generator can be less permissive for backup generators, requiring that if two vacancies are posted for backup generators that both be filled (e.g., *N*=2*, M*=0)*.*

In some examples, if the update-inputs needed to update a resource from one role to another are not present or available within a given time frame for performing the update, the cascading assignment planner can reject the bid or otherwise mark the assignment plan as unfulfilled. For example, if a first pilot (as a resource) bids and wins reassignment from role A to role B, but trainers and simulator space is unavailable to qualify the pilot for role B from role A, the cascading assignment planner can reject the first pilot's bid. Thus, by rejecting the first pilot's otherwise acceptable bid based on the availability of the role-updating inputs, the cascading assignment planner (potentially) allows a second pilot to win the bid in a second round of assignment and analysis or leave the vacancy unfilled. Various factors to consider when scheduling how and when to initiate a role reassignment are discussed in greater detail in regard to Figures 5, 6A-6B, and 7.

At block 260, the cascading assignment planner determines whether to publish the update plan or to attempt adjustments to the plan. In various examples, the cascading assignment planner determines to publish the plan if no vacancies remain after assignment, and otherwise returns to block 250 if vacancies remain. Additionally or alternatively, the cascading assignment planner can evaluate whether sufficient update-inputs are available to perform the update plan (e.g., transitioning the existing resources to the new roles) and determines not to publish the plan in insufficient update-inputs are available. In various examples, the cascading assignment planner can evaluate the update plan based on various key performance indicators in addition to or instead of the filling of various vacancies and the sufficiency of the update-inputs to perform the update plan.

In some examples, when a random tie-breaker was used to assigned a new role, the cascading assignment planner determines to send the assignment for re-review of the add-on effects of awarding the tied assignment to a different resource (e.g., per a subsequent iteration of block 250). For example, if computing device A and computing device B were competing for a given role, and device A was awarded the role in a first iteration, device B is awarded the role in the second iteration.

In some examples, when the updated assignment plan still has vacancies unfilled, the cascading assignment planner removes one or more of the vacancies. In some instances, such as when the removed vacancy resulted in cascading vacancies, the removal of a vacancy from the assignment plan can affect a different hierarchical role level. Additionally or alternatively, when insufficient update-inputs are available to transition the resources to the reassigned roles, the cascading assignment planner can remove one or more of the vacancies or surpluses to keep a given resource in an original role, thus reducing the demand for update-inputs.

Although the determination of whether to publish the update plan or to attempt adjustments to the plan in block 260 is generally discussed in relation to end resource balance (e.g., whether sufficient resources are assigned to meet demand indicated by the number of instances in each of the roles), and update-input availability (e.g., whether the currently available update-inputs can be assigned to transition the resources to the new roles within a designated time period), the cascading assignment planner can also consider additional key process indicators. For example, the cascading assignment planner can determine to adjust the assignment plan even when the reassigned resources and allocated update-inputs are sufficient if the update plan would result in the operational balance falling below an operational threshold due to the number resources taken offline for updates exceeding a given threshold. Accordingly, if too many updates in a given time range for a given subset of the resources would result in not enough resources being available to meet current demand, the cascading assignment planner can determine to adjust one or both of the assignment plan and the update plan.

For example, if after a first iteration of block 250 a vacancy remains for role A due to no resource bidding to fulfill role A, the cascading assignment planner can remove the vacancy at role A, or remove a vacancy at role B filled by a resource previously assigned to role A, thus keeping that resource at role A and preemptively "removing" the vacancy at role A. Accordingly, the cascading assignment planner can remove a vacancy in the assignment plan by cancelling a vacancy directly or by cancelling the vacancies in other roles that cascade to a given vacancy.

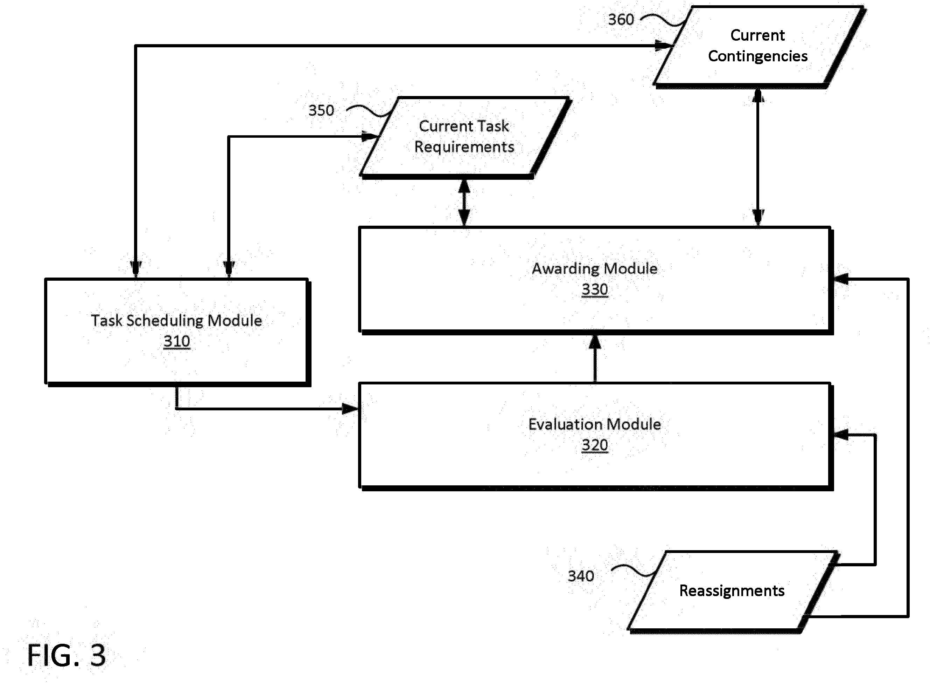

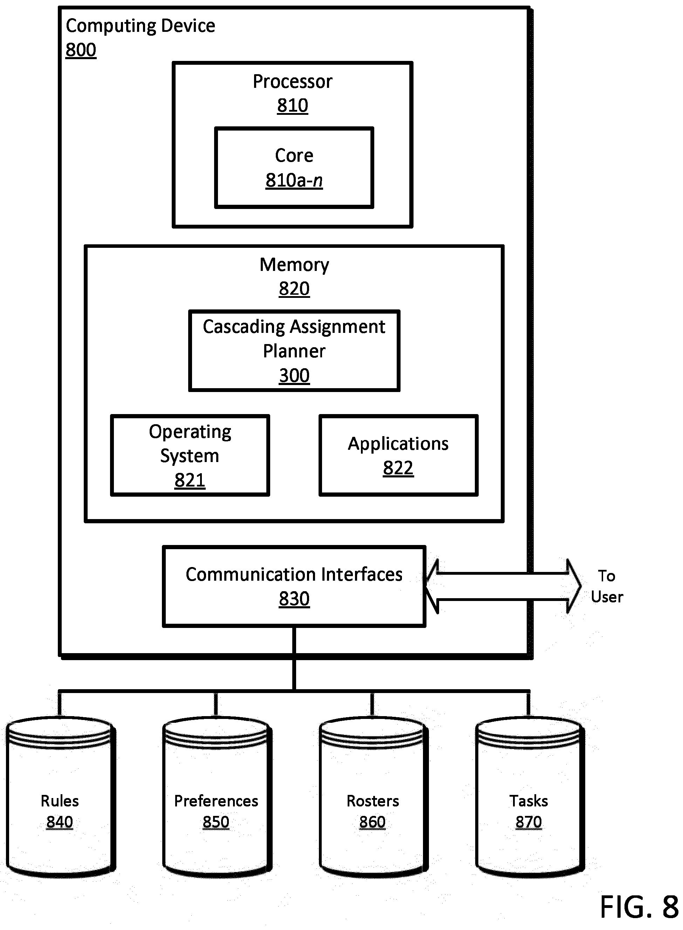

Figure 3 illustrates an architecture for a resource scheduler, including a cascading assignment planner, according to examples of the present disclosure. In various examples, the individual modules and data described in the architecture can be stored and provided by one or more computing devices, such as the computing device 800 described in relation to Figure 8.

The architecture includes a task scheduling module 310 that assigns resources to tasks within an associated role for that resource to meet the operational goals of the resources/roles. For example, a task scheduling module 310 for an airline can identify what flight crew (e.g., pilots and co-pilots as resources) are qualified for certain aircraft out of certain airports (as roles) to determine which flights (as the tasks) to assign those flight crew to. In other examples, a task scheduling module 310 for a datacenter can identify what servers (as resources) are set up to provide different virtual machines and workloads to users (as roles) to determine which users are provided a given set of computing resources (as the tasks).

The task scheduling module 310, when assigning resources to tasks, observes the current task requirements 350 and current contingencies 360 for the assignment environment and updates these data sets as assignments are made. For example, the data related to what tasks need to be filled by resources (e.g., how many flights are scheduled from a given airport, what baseload power generation is set to, how many instances of virtual machines are requested) are included in the current task requirements 350. The current contingencies 360 data includes planning information about the roles of the resources and margins for assigning those resources to tasks (e.g., the current role assignments and scheduled future reassignments, vacation/downtime/backup scheduling, etc.).

As resources assigned to tasks may be unavailable for role updates (e.g., a pilot scheduled to fly from airport A to airport B cannot be simultaneously scheduled for training on a new airframe, a generator providing baseload power cannot be taken offline for upgrades, etc.), the task scheduling module 310 interacts with the other modules via the current task requirements 350 and current contingencies 360 to ensure that a sufficient number of roles are set out for long term planning and that current scheduling balances the available pool of resources for meeting task requirements, allowing for safety margins, and permitting time for role update activities.

When the amount of resources fall outside of a usage range for scheduling, the task scheduling module 310 initiates a role update process, using the evaluation module 320 and the awarding module 330. In various examples, the usage range can specify a lower-bound for resource usage rates and an upper bound that the task scheduling module 310 should attempt to remain within. For example, at least *N* resources for each given role may be reserved as backups (or to account for maintenance, downtime, and last minute rescheduling, etc.) so that the upper bound is less than 100% usage. Similarly, the lower bound may specify that no more than *M* resources for each given role may be unassigned in a given schedule. Accordingly, when more than *M* resources are unassigned or fewer than *N* resources remain unassigned in a schedule, the task scheduling module 310 can initiate a role update process. In various examples, the task scheduling module 310 can implement different thresholds for different roles (e.g., *Nₐ* ≠ *N*_{b}), make temporary exceptions to the thresholds (e.g., relaxing or tightening the thresholds in anticipation of known events), or analyze the usage threshold versus a frequency threshold (e.g., when the usage threshold is satisfied at least *X*% of the time, skip initiating a role update process).

When initiating a role update process, the task scheduling module 310 analyzes the current task requirements 350 and the current contingences 360 data to identify surpluses or deficiencies in the roles and resources assigned to those roles to adjust the number of roles for use in the future. For example, when the task scheduling module 310 assigns *X*% of the available resources to tasks (where *X* is above a threshold to leave 100-*X*% of the resources available as backups), the task scheduling module 310 indicates that more roles for that task should be created. In various examples, the number of roles can be increased, decreased, or shifted between different definitions (e.g., more of role A and fewer of role B) based on forecasted data and how closely the current or short term scheduling adheres to the usage thresholds. For example, as demand for baseload power increases (or as a margin produced versus demanded decreases), the task scheduling module 310 can determine that additional roles for more baseload generators are needed, which can be satisfied by creating a new role for a baseload generator.

An evaluation module 320 and an awarding module 330 work together in tandem as a cascading assignment planner to identify likely shifts in resource planning and to plan for how (or whether) to follow through with the requested update in roles when actual bids are received.

The evaluation module 320 receives inputs from the task scheduling module 310 to identify how many vacancies should be created to fill forecasted demand for resource and historic reassignments 340 data (and potentially and outstanding unfulfilled reassignments or standing bids) to identify how the resources are likely to be reassigned in light of the forecasted changes. Additionally, the evaluation module 320 identifies likely cascades in the vacancies due to reassigning resources from one role to another. Based on the inputs from the task scheduling module 310 and the reassignment 340 data, the evaluation module 320 performs several iterations of the assignments to probabilistically evaluate and adjust the assignment plan (e.g., as per blocks 210-230 of method 200 discussed in relation to Figure 2) to provide an optimized set of vacancies for the resources to fill.

After the evaluation module 320 publishes the open vacancies for the assignment plan, the awarding module 330 receives actual bids for reassignments from the reassignment 340 data to fill these vacancies (or to move out of surplus roles). The awarding module 330 determines which bids are awarded to which vacancies based (in part) on the current task requirements 350 and current contingencies 360 data. Accordingly, the resources are scheduled for updating from current roles to new roles when the role-updating inputs are available, and when removing the resource from performing tasks (e.g., during an update process) will have reduced impact of the task scheduling module 310 filling the tasks with the available resources.

In various examples, the awarding module 330 considers various priority schemes in determine which resources to reassign to which vacancies and can adjust the assignment plan (if needed) to ensure that the task scheduling module 310 has sufficient resources for the short term assignment of resources to tasks (e.g., as per blocks 250-260 of method 200 discussed in relation to Figure 2).

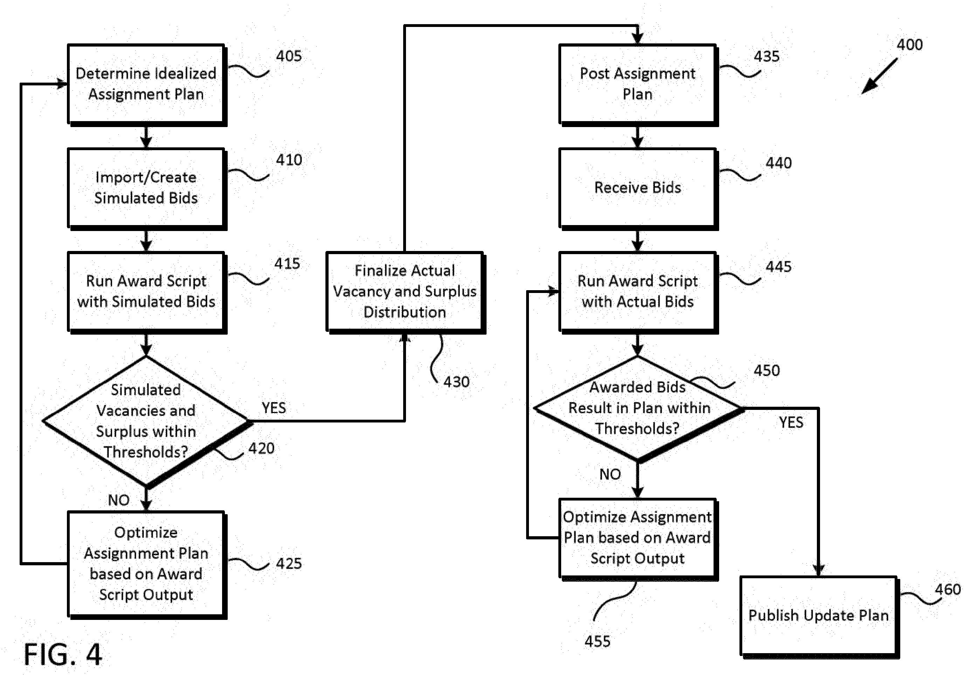

Figure 4 is a flowchart of a method 400 for generating a reassignment plan, according to examples of the present disclosure.

At block 405, the cascading assignment planner determines an idealized assignment plan, including a distribution of vacancies and surpluses for various roles. An initial ideal vacancy and surplus distribution is based on the forecasted demands for resources to assign to tasks at a future time, and when compared against the current distribution identifies any vacancies (where a new role is to be created) and surpluses (where an existing role is to be eliminated). Subsequent ideal vacancy and surplus distributions incorporate any cascading vacancies identified via simulation into the assignment plan so that any additional vacancies and naturally cured surpluses are considered in subsequent simulations and in the eventual published assignment plan.

In various examples, the cascading assignment planner can include various overages or safety margins for task assignment when creating the distribution. For example, the cascading assignment planner can include sufficient resources to provide between 110% and 120% coverage for a given role (e.g., to plan for between *N* and *M* resources becoming temporarily unavailable due to scheduled maintenance, downtime, vacation, sick days, training, etc.) .

At block 410, the cascading assignment planner imports or creates simulated bids for filling the ideal vacancy/surplus distribution. In various examples, the cascading assignment planner can use previous bidding patterns (e.g., importing bids) to analyze how the various resources are expected to shift between roles. In various examples, the variable and probabilistic nature of the bids simulates the expected individual preferences of the resources for reassignment (e.g., each pilot has different preferences for what roles to fill) or the expected choices of an external actor in charge of the resources (e.g., a power supply company setting preferences for generator deployments to meet a governmental mandate for power production set according to the assignment plan).

In various examples, previously submitted bids may go unfilled, but remain outstanding for a period of time. These standing bids can be included with the imported bids or may be used to adjust the simulated bids (making certain other bids more or less probabilistically likely to occur).

At block 415, the cascading assignment planner runs an award script with the simulated bids imported or created (per block 410). The award script applies various priority schemes to the simulated bids and outputs which resources are accepted for the vacancies or removed due to the surpluses. The output of the award script also identifies any unfilled vacancies or cascaded vacancies created in response to accepting the bids and the update-inputs needed to shift the resources to the new roles.

At block 420, the cascading assignment planner determines whether the simulated vacancies and surpluses are within confidence thresholds. The confidence thresholds indicate varying confidence levels that the simulated bids for meeting the assignment plan accurately represent the future actual bids that will be received once the assignment plan is ready for actual bids (per block 440), or that the vacancies and surpluses indicated in the assignment plan will result in a update plan that will meet release thresholds within the available update-inputs (per block 450).

In some examples, the confidence thresholds include a minimum number of simulated iterations that must be performed before finalizing the vacancies and surpluses as well as a window of analysis for other thresholds (e.g., make a determination based on the last *N* simulations). The various thresholds can include criteria for what qualifies as a successful or unsuccessful iteration (e.g., resource levels are between *X*% and *Y*% of the ideal assignment plan set per block 410 in the current iteration) and what number or percentage of the iterations are required to be successful before determining to finalize the assignment plan.

When the simulated vacancies and surpluses are within the thresholds, method 400 proceeds to block 430. Otherwise, method 400 proceeds to block 425.

At block 425, the cascading assignment planner optimizes the update plan based on the award script output. In various examples, the optimization creates additional vacancies or removes various vacancies that, if filled, would result in a deficiency in resource allocation, so that the assignment plan does not create more resource allocation problems that the assignment plan seeks to resolve. Additionally, when the update plan would require more update-inputs than are available, the cascading assignment planner can adjust the assignment plan so that a different mix of vacancies and surpluses so that the new assignment plan can be achieved with the available update-inputs.

At block 430, the cascading assignment planner finalizes the actual vacancy and surplus distribution. When the cascading assignment planner determines (per block 435) that the assignment plan is within thresholds and can be achieved with the available update-inputs, the assignment plan is readied for actual bidding from the resources.

At block 435, the cascading assignment planner posts the vacancies and surplus roles indicated in the assignment plan. In various examples, the vacancies and surplus roles can be posted to a resource management interface that automatically contacts the resources (or the persons or systems in charge of scheduling or maintaining the resource). In other examples, the cascading assignment planner posts the vacancies and surplus roles in a repository where interested resources or controllers can access the assignment plan and submit bids for reassignment.

At block 440, the cascading assignment planner receives bids from resources to fill the vacancies posted (per block 435). In various examples, the bids can include previously submitted (and unfilled bids) as well as newly posted bids. The bids can be received over a time period, so that the cascading assignment planner can prioritize earlier bids over later bids, or treat all bids received over the bid period equally.

At block 445, the cascading assignment planner runs the award script with the actual bids received (per block 440). The cascading assignment planner uses the same award script as used in block 415, which can apply various priority schemes to the actual bids. Once the award script is run, the cascading assignment planner outputs which resources are accepted for the vacancies or removed due to the surpluses.

At block 450, the cascading assignment planner determines whether the awarded bids result in a filled assignment plan within a release threshold. In various examples, the release threshold includes criteria for what qualifies as a successful or unsuccessful assignment (e.g., resource levels are between *X*% and *Y*% of the ideal assignment plan set per block 410 in the current iteration, sufficient update-inputs to move the resources between roles in the current iteration, and combinations thereof). When the awards are within the thresholds, method 400 proceeds to block 460. Otherwise, method 400 proceeds to block 455.

At block 455, the cascading assignment planner optimizes the update plan based on the award script output (as run per block 445). In various examples, the cascading assignment planner can cancel various vacancies if unfilled, the cascading vacancies created by filling a vacancy result placing another role outside of operational thresholds (e.g., below 100% staffing level, below X Megawatts (MW) power generation capacity), or when the particular reassignments cannot be achieved with existing update-inputs.

At block 460, the cascading assignment planner publishes the plan. Once published, various trainings, upgrades, and locational changes can be scheduled to update the various resources from current roles to future roles awarded according to the update plan. Method 400 may then conclude.

Figure 5 illustrates role reassignment combinable updates, according to examples of the present disclosure. When reassigning resources 110 to different roles 120, various updates for the reassignments can occur in tandem with one another, and should (where possible) be scheduled to occur at the same time to make the update process more efficient (e.g., to use the available update-inputs more efficiently).

For example, consider a first role 120a of pilot of aircraft A, a second role 120b of pilot of aircraft B, a third role 120c of co-pilot of aircraft A, a fourth role 120d of co-pilot of aircraft B, and a fifth role 120e of pilot of aircraft C. When a first resource 110a of a pilot initially assigned to the first role 120a retires, a vacancy opens in the first role 120a, which the other flight crew (e.g., resources 110b-e) can fill, causing a cascading chain of vacancies. To update the roles 120 for these various resources, various training and certification courses may be needed (such as flight certification for a new airframe or pilot versus co-pilot duties for a given airframe). However, some of these trainings and certifications can be performed together, such as when certifying and training the pilot and co-pilot for one aircraft type. Accordingly, a first paired update activity 510a (generally or collectively, paired update activity 510) includes the update activities for the first role 120a and the third role 120c (e.g., for the pilot and co-pilot of aircraft type A) and a second paired update activity 510b includes the update activities for the second role 120b and the fourth role 120d (e.g., for the pilot and co-pilot of aircraft type B).

In various examples, the cascading assignment planner identifies when the update path for a pair (or larger group) of resources results in a combinable or paired update activity 510, and seeks to increase or otherwise maintain the number of paired update activities 510 when the update plan is adjusted. For example, when the cascading assignment planner identifies that a posted vacancy is to be removed, the cascading assignment planner prioritizes removing vacancies (or rejecting bids) that are not filled with combinable update activities over those with paired update activities 510. Accordingly, the cascading assignment planner identifies what adding or removing a posted vacancy or surplus does for operational readiness (e.g., whether sufficient resources are ready for assignment) and for how the update-inputs are affected by adding or removing a posted vacancy or surplus.

Therefore, the cascading assignment planner can identify which vacancies or surpluses to keep as posted and which to remove from postings when adjusting an assignment plan, as removing certain vacancies or surpluses may have no effect on the availability of update-inputs if another resource still requests those update-inputs. In various examples, the cascading assignment planner prioritizes removing vacancies across the paired update activity 510 (e.g., both the vacancies and surpluses associated with the third role 120c and the first role 120a when insufficient update-inputs exist for the first paired update activity 510a). Additionally or alternatively, the cascading assignment planner can prioritize removing vacancies or surpluses that are not associated with paired update activities 510 over vacancies or surpluses that are associated with paired update activities 510.

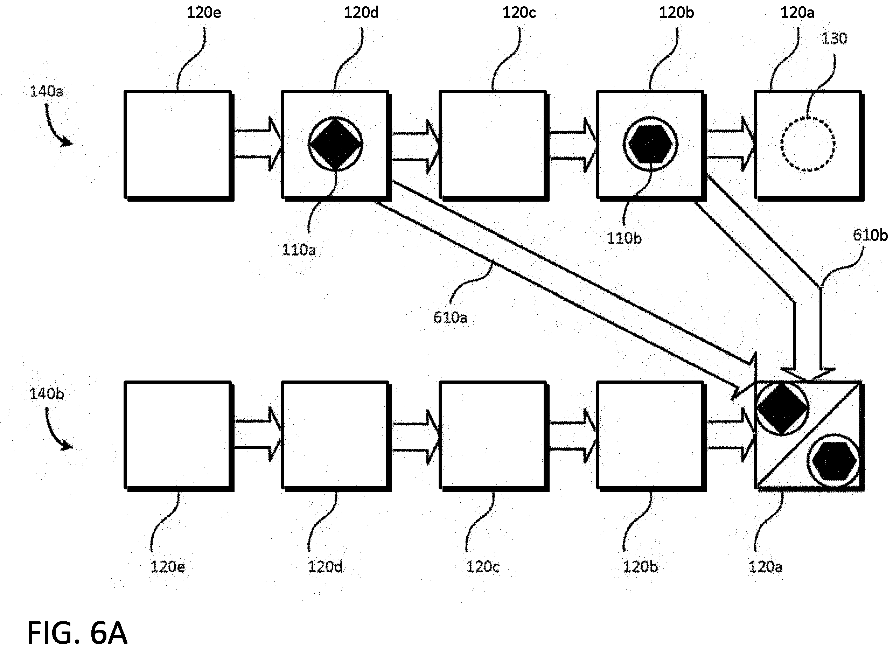

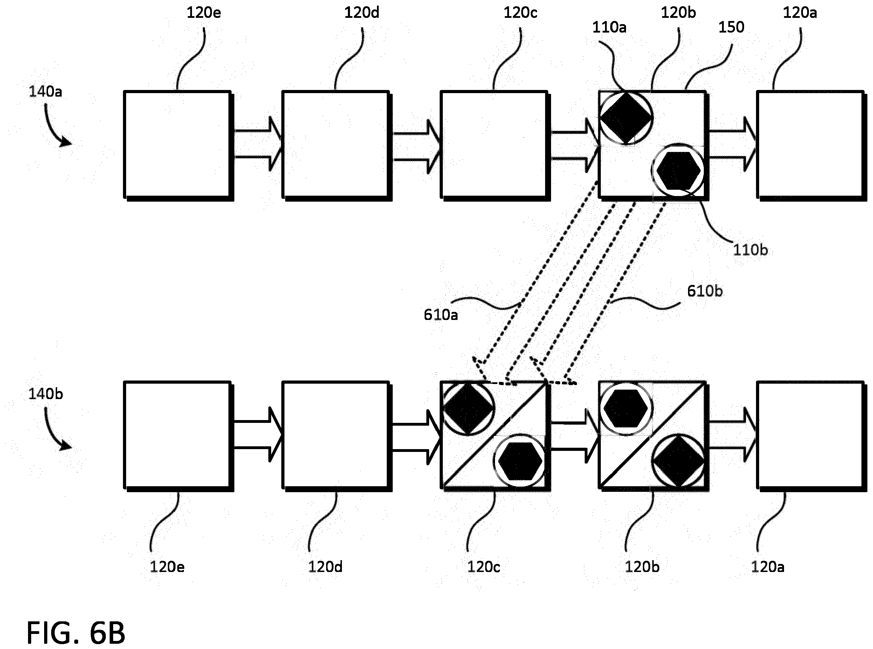

Figures 6A and 6B illustrate competing reassignment between two resources 110 to a role 120, according to examples of the present disclosure. Although reassignments can include hierarchical cascades (where the resource 110 assigned to a given role 120 moves to the "next" role 120 in a sequence, allowing a resource 110 assigned to the "previous" role 120 to move into the given role 120), a role assignment planner can also contend with competing reassignments that deal with resources 110 moving between roles 120 out of sequence. For example, as in Figure 6A, when the sequence is defined as the fifth role 120e to the fourth role 120d to the third role 120c to the second role 120b to the first role 120a, a first resource 110a originally assigned to the fourth role 120d is reassigned in sequence when updated to the third role 120c. However, the first resource 110a can also be reassigned out of sequence if reassigned to the fifth role 120e, the second role 120b, or the first role 120a from the fourth role 120d.

In Figure 6A, a first resource 110a is initially assigned to a fourth role 120d, and a second resource 110b is initially assigned to a second role 120b in an initial resource assignment 140a where a vacancy 130 is open in the first role 120a. Each of the first resource 110a and the second resource 110b are candidates for reassignment to the first role 120a to fill the vacancy 130, but as only one vacancy 130 is present, only one of the first and second resource 110a-b can be reassigned to the first role 120a in a second resource assignment 140b. Although discussed in relation to Figure 6A with two resources 110 competing for one vacancy 130, in various examples *N* resources 110 can compete for *M* vacancies 130, so long as *N* > *M*.

Additionally or alternative, as shown in Figure 6B, the competing resources 110 can compete to remain in a role 120 that is currently filled. For example, if a first resource 110a and a second resource 110b are currently assigned to a second role 120b, and the cascading assignment planner posts a surplus 150 in the second role 120, one of the first resource 110a and the second resource 110b can be moved to a different role 120 (e.g., the third role 120c) to account for the surplus 150 in the second role 120b. Stated differently, the cascading assignment planner determines whether to move the first resource 110a (via the first update path 610a) to a new role 120 or the second resource 110b (via the second update path 610b) to a new role 120 with the other resource remaining assigned to the second role 120b. Accordingly, the cascading assignment planner can treat the first resource 110a and the second resources 110b as competing to remain in the second role 120b, despite no vacancy 130 being posted in the second role 120b. Although shown as potentially reassigning both the first resource 110a and the second resource 110b to the third role 120c, in various examples, the update paths 610 for resources 110 competing to remain in a current role 120 can assign the respective resources 110 to different new roles 120 from one another.

In various examples, different priority schemes can be used when determining which resource 110 of two or more resources 110 (e.g., 110a and 110b in Figures 6A and 6B) competing to fill a vacancy 130 (posted or otherwise) is to be awarded the vacancy 130 and updated to the new role 120. For example, seniority (e.g., which resource 110 has been in use the longest), spatial proximity (e.g., the resource 110 currently assigned to the role 120 located closest to the vacancy 130), sequence-based priority (e.g., resources 110 in roles 120 closer to the role 120 with a vacancy 130 in the sequence are prioritized over resources 110 in roles 120 further from the vacancy 130 in the sequence), and time since last reassignment (e.g., prioritizing resources 110 in a current role 120 the longest for reassigned to the vacancy 130) can be used separately or in combination to determine which competing resource 110 to fill the vacancy 130. Other priority schemes can also be used, and if two resources 110 are tied in a priority scheme, random selection can be used.

Additionally or alternatively to priority schemes, the cascading assignment planner can observe a first update path 610a (generally or collectively, update path 610) for reassigning the first resource 110a to the first role 120a and a second update path 610b for reassigning the second resource 110b to the first role 120a. The update paths 610 allow the cascading assignment planner to combine analysis of out-of-sequence updates with priority levels of the resources 110 using priority keys as discussed below. Accordingly, the cascading assignment planner can better plan for the update-inputs needed to transition the resources to new roles 120.

Consider the example of two flight crew (e.g., as a first resource 110a and a second resource 110b) who are competing for the same vacancy 130 (e.g., as a new role 120). The various update paths can be given priority keys to represent what the resources are competing for such as role, timing of update, location and update-inputs, etc.. As is described in relation to various examples given elsewhere in the present disclosure, various entities can customize how the cascading assignment planner uses the priority keys to divide and manage competition between resources for various roles and the timing of updating to those roles. The priority keys allow the cascading assignment planner to divide the roles (and updates) into different "buckets" or subdivisions, thus simplifying the optimization space while still allowing the priorities and preferences of the resources to be respected in role reassignment.

After confirming that both crew members have met the basic requirements for a role update (e.g., the crew are not in a cool-down period after transitioning to a current role, baseline experience levels are met, etc.), the cascading assignment planner determines how to handle priority by examining the priority keys assigned to the individual update paths 610. For example, if the first crew member is more senior than the second crew member (when priority is based on seniority), the bids for the first update path 610a by the first crew member are given priority over the second crew member's bids for the second update path 610b.

Priority is a deterministic or inherent property of the resources (set according to a priority scheme), whereas preference can be explicitly or implicitly determined by or for the resource. For example, a first pilot may wish to transfer to a new role as soon as possible (e.g., providing an implicit preference for earlier transitioning), whereas a second pilot may be on vacation during a given time period or wish to transition after the school year (to ease moving for family members) and provide an explicit preference to transition or not transition at various times. In other examples, an operator can express a preference for when to transition generators to new roles based on power demand cycles (e.g., preferring to move generators in the fall or spring, as opposed to winter or summer when power demand is higher) and provide specific exceptions to this general preference (e.g., due to availability of technicians or the potential for pairing transitions).

Table 1 illustrates a more nuanced update path based on priority keys, where a first generator (as a first resource 110a) and a second generator (as a second resource 110b) are both being considered for updates to two different roles 120a-b (e.g., as a backup generator and a load balancing generator). To respect the priority of the first generator over the second generator, if the two generator are competing over a vacancy for a desired role, the first generator must be assigned that role or a more preferred role. For example, if the second generator is reassigned to a load-balancing role, the first generator must be assigned to either the load-balancing role or the backup role. Similarly, if the second generator is reassigned to a backup role, the first generator must also be assigned to the backup role. These preferences may be set by an external party (e.g., a third-party management firm or owner of the generators, a regulator, a rating agency, or the like).

**Table 1**

| Priority Key | Resource | Priority | Preference |
|---|---|---|---|
| Backup | First Generator | 1 | 1 |
| Backup | Second Generator | 2 | 1 |
| Load-Balancing | First Generator | 1 | 2 |
| Load-Balancing | Second Generator | 2 | 2 |

If the cascading assignment planner is set to ignore or not consider update time, the second generator can be updated to the new role before the first generator is updated to a corresponding new role. However, if the cascading assignment planner is configured to set updates based on timing, the preferences can be further expanded to account for time (e.g., in Quarter 1 (Q1), Quarter 2 (Q2), etc.) as indicated in Table 2.

**Table 2**

| Priority Key | Resource | Priority | Preference |
|---|---|---|---|
| Backup Q1 | First Generator | 1 | 1 |
| Backup Q1 | Second Generator | 2 | 1 |
| Backup Q2 | First Generator | 1 | 2 |
| Backup Q2 | Second Generator | 2 | 2 |
| Backup Q3 | First Generator | 1 | 3 |
| Backup Q3 | Second Generator | 2 | 3 |
| Load Balancing Q1 | First Generator | 1 | 4 |
| Load Balancing Q1 | Second Generator | 2 | 4 |

Accordingly, if the second generator is updated in Q3 (according to the third preference) to a backup generator role, to maintain priority, the first generator must be updated to a backup generator role in Q3 or earlier.

The preferences in each of the examples described in relation to Table 1 and Table 2 are static; the first generator maintains higher priority across every preference over the second generator. However, the cascading assignment planner can also adjust the priority of the resources based on freeze periods, group dynamics, or other explicitly stated variances to a general preference rule.

For example, in Table 3, a priority freeze can be applied as a temporary adjustment to the baseline priority levels of the resources. Accordingly, when a resource 110 is under a temporary reassignment freeze or is otherwise marked as unavailable for reassignment in a given time period (e.g., due to vacation, scheduled maintenance, required duty periods, etc.), a temporary adjustment is made to the priority of that resource to give greater priority to other resources 110 for reassignment during those time periods. For example, an offset (F) of 1000 applied to the initial priority of the first resource 110a during Q1 and Q2 allows the second resource 110b to be temporarily treated with higher priority for reassignment. Similarly, the offset (F) can be applied to the priorities for the second generator.

**Table 3**

| Priority Key | Resource | Priority | Preference |
|---|---|---|---|
| Backup Q1 | First Generator | 1001 (1+F) | 1 |
| Backup Q1 | Second Generator | 2 | 1 |
| Backup Q2 | First Generator | 1001 (1+F) | 2 |
| Backup Q2 | Second Generator | 2 | 2 |
| Backup Q3 | First Generator | 1 | 3 |
| Backup Q3 | Second Generator | 1002 (2 + F) | 3 |
| Load-Balancing Q1 | First Generator | 1001 (1+F) | 4 |
| Load-Balancing Q1 | Second Generator | 2 | 4 |

In various examples, the value of offset (F) is set not only to prioritize other resources above a deprioritized resource, but to place the deprioritized resource outside of a priority threshold for reassignment. For example, by setting F >= P, where P is the priority threshold (P) for consideration for a vacancy 130 in a given role 120, even if both the first and second resources 110 are deprioritized, neither will be awarded the vacancy in an ineligible or otherwise deprioritized time.

In some examples, the value of offset (F) is set to deprioritize certain resources based on the lowest priority value (L) of the other resources bidding for the vacancy 130. For example, in a setting with three resources 110a-c each with a respective priority of 1, 2, and 3, where priority 1 is normally considered first, the lowest priority value (L) is equal to 3. Accordingly, by setting F = L when L < P, applying the offset to any one of the resources 110 shifts that resource 110 to be later in the priority order, but that resource 110 remains in consideration. For example, if the first resource 110a is in a freeze period, the associated priority is shifted from 1 to 4 (e.g., F = L = 3; 1+3=4) so that the first resource 110a can still be considered to fill the vacancy 130, albeit not at the expense of resources 110 outside of the freeze period.

By applying an offset to the initial priorities, the cascading assignment planner can more efficiently manage shifting priorities. Instead of constantly making date comparisons to determine whether temporary adjustments should be considered to the priority of a given resource 110, a single adjustment is made at the time of bid submission during analysis of an assignment plan (e.g., block 240 of method 200 in Figure 2 or block 440 of method 400 in Figure 4). Accordingly, fewer computing resources are required when using priority keys as described herein over other methodologies, thereby improving the functionality of the underlying computing devices.

In other examples, in Table 4, a group dynamic is applied by keying priorities based on transfer groups, where the first generator and the second generator (as resources) belong to group A and are competing for a vacancy 130 in group A, while a third generator from group B is also competing for the vacancy in group A. By treating the starting groups separately (e.g., due to different update resources needed to relocate a resource from one location to another, different training requirements, etc.), the cascading assignment planner can independently gauge priority within each group. In this scenario, if the second generator (having lower priority than the first generator in group A) is updated to be a backup generator, the first generator will also be updated, thereby preserving priority within group A. However, the third generator can be updated (or not) without any effect on the priority of the first or second generators and the decision to update the first or second generator has no effect on the prioritization of updating the third generator (aside from potentially filling a vacancy 130).

**Table 4**

| Priority Key | Resource | Priority | Preference |
|---|---|---|---|
| A to A Backup | First Generator | 1a | 1 |
| A to A Backup | Second Generator | 2a | 1 |
| A to A Backup | Third Generator | N/A | N/A |
| B to A Backup | First Generator | N/A | N/A |
| B to A Backup | Second Generator | N/A | N/A |
| B to A Backup | Third Generator | 1b | 1 |

The priority keys can be based on the role 120 being considered, the update-inputs required to transition the respective resource 110 to the new role 120 (e.g., via an update path 610), or combinations thereof. For example, two resources may compete for vacancies 130 or particular input resources for an already awarded role reassignment, such as when two pilots assigned for an update to the same role may compete for the training course in a particular month (e.g., the one course offered in January versus the one course offered in April).

Depending on the update rules, the cascading assignment planner can allow for temporal flexibility, by allowing the same preference and seniority setting to be expressed in the priority key if within a given time window. For example, if the cascading assignment planner treats each quarter of the year as a window, the first resource can express the same preference for any training (or update) defined in that quarter (e.g., a preference of *X* for trainings in January and February for Q1 and a preference of *Y* for trainings in April and June for Q2).

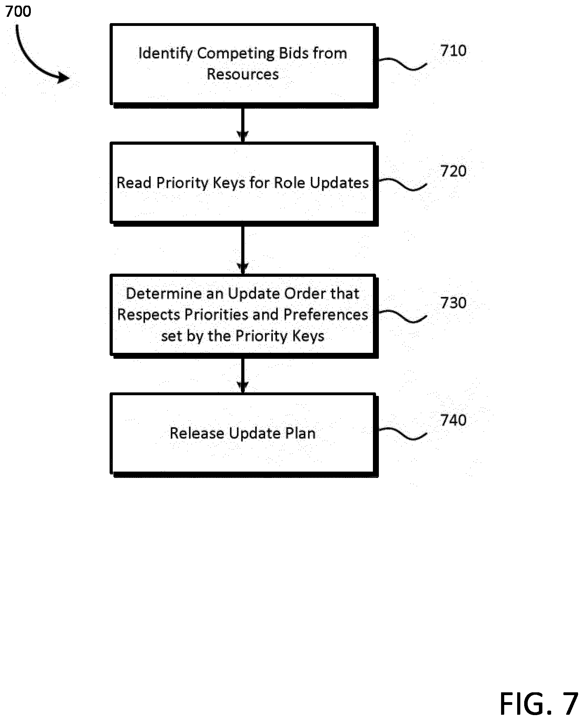

Figure 7 is a flowchart of a method 700 for applying priority keys for resource assignment planning, according to examples of the present disclosure.

At block 710, the cascading assignment planner identifies competing bids from resources. For some examples, the competing bids are for vacancies in a given role different from the current roles to which at least two resources are currently assigned. In various examples, the competing bids are for update-inputs for reassignment to a new role that the at least two resources are already scheduled for reassignment to (e.g., competing for when or where the update is to occur). In further examples, the competing bids are to remain in a currently assigned-to role when a resource with superior priority forces another resource with lower priority from the currently assigned-to role.

Competition between bids can occur when at least *N* resources have submitted bids for *N-1* or fewer vacancies. Additionally or alternatively, competition between bids can occur when an order at which the resources are to be awarded vacancies (or transitioned to those awarded vacancies via competed-for update paths) is to respect a priority order among the resources. To respect the priority order, the cascading assignment planner ensures that a first resource with a highest priority should be awarded the competing bid before other resources with lower priorities are awarded that bid. However, the resource with highest priority is not necessarily awarded an update path with its highest preference; instead the cascading assignment planner ensures that the highest priority resource is awarded an update path associated with a priority key which the resource gives a higher preference than the priority key of the update path of any less prioritized resource. Stated differently, the cascading assignment planner denies lower-priority resources the competing bid when a higher-priority resource is competing on the same bid, and had not been assigned a higher preference update path.

In various examples, the competition for update-inputs affects the competition for vacancies, such that if a first resource cannot be updated before a second resource, the second resource is not awarded a bid for the vacancy. Thereby, the cascading assignment planner verifies that an order of reassignment from the current roles to the new roles respects a priority order for the competing resources.

In various examples, competition can be divided based on priority keys so that separate groups of resources are not considered competing for a given bid. Additionally or alternatively, competition for bids can be separated across several rounds, so that resources can initially compete for a vacancy, but do not compete (or compete differently) for the update-inputs to transition to a vacancy once awarded in the initial competition. Accordingly, resources belonging to both group A and *B* can compete for a vacancy in a given role, but resources belonging to group A compete separately from resources belonging to group B for update-inputs. For example, when group A includes wind turbines electrical generators set as load balancing generators and group *B* includes diesel electrical generators set as backup generators, generators from each group can bid on a new role as baseline generators, but once awarded to the new roles do not compete for update times, as different technicians (who are scheduled separately) are responsible for updating the wind turbines versus the diesel generators.

At block 720, the cascading assignment planner reads the priority keys associated roles and update-inputs for the competing bids. The priority keys correspond to each role or update-input to collect the priorities and preferences for each of the resources bidding for a given update-input or vacancy.

For example, a first resource of a highest priority, a second resource with a middle priority, and a third resource with a lowest priority all submit bids for update paths expressing preferences to be trained earlier rather than later. Accordingly, the priority keys associated the earliest update-input (e.g., an earlier training course, hardware upgrade, software upgrade, etc.), initially indicate a priority of A, and with a preference of 1 for an the first resource, a priority of B and a preference of 1 for the second resource, and a priority of C and a preference of 1 for the third resource. Similarly, the priority keys for the middle and latest update-inputs indicate the respective priorities and preferences for the first, second, and third resources by the corresponding priority of A (for the first resource), of B (for the second resource), and of C (for the third resource), where A is the highest priority, C is the lowest priority, and B is an intermediate priority to A and C.

Therefore, unless an external factor changes the preferences or priorities (or both), the second resource can only be awarded an update-input when the first resource has been awarded an update-input with the same or higher preference. Similarly, the priority/preference scheme cascades to the third resource, so that the cascading assignment planner can only award the third resource an update-input when the second resource has been awarded an update-input with the same or higher preference.

The cascading assignment planner, when reading the priority keys, reads in any external factor that changes the priorities or preferences from baseline values. In various examples, different offsets are used to reflect different levels of priority adjustments.

For example, when a first resource has a first priority (A) and a second resource has a second priority (B) that is lower that the first priority (A > B), an offset (F) can be applied to the first priory to deprioritize the first resource relative to the second resource (e.g., A+F < B) or can be applied to the second priority to leapfrog the second resource's priority ahead of the first resource when considering preferences in awarding competing bids (e.g., A < B+F). In some examples, the cascading assignment planner temporarily applies a "hard freeze" via an offset applied to some of the priorities indicated in the priority keys to remove the corresponding resources from consideration for those bids (e.g., during a subset of available times or locations), where the offset (F) is equal to a priority threshold (P) so that the corresponding resources are temporarily non-viable. In some examples, the cascading assignment planner temporarily applies a "soft freeze" via an offset applied to some of the priorities indicated in the priority keys to deprioritize the corresponding resources from consideration for those bids (e.g., during a subset of available times or locations), where the offset (F) is equal to a lowest priority (L) among the competing resources when the deprioritized resources remain viable for consideration for reassignment at a lower priority than the initial priority of the lowest-priority competing bid.

At block 730, the cascading assignment planner determines an update order for the competing resources via the update paths that respects the preferences and priorities specified in the priority keys. The priority keys indicate a cascading order in which to award the competing bids, which accounts for external factors that can affect a subset of the priorities or preferences without having to perform multiple date or priority comparisons, thus improving the processing efficiency of the underlying computing devices.

At block 740, the cascading assignment planner releases an update plan scheduled according to the update order. In various examples, the update plan is posted in a central repository or the relevant sections are transmitted to the effected resources (or the controllers therefor). Method 700 may then conclude.

Figure 8 illustrates a computing device, such as may be used to provide a cascading assignment planner 300, according to examples of the present disclosure. Figure 8 illustrates example computing components of a computing device 800 or other processing system as may be used to provide a combinatorial optimizer described in the present disclosure.

The computing device 800 includes a processor 810, a memory 820, and an interface 830. The processor 810 and the memory 820 provide computing functionality to run various programs and/or operations for the respective computing device 800, including the storage and retrieval of the various data described herein and the operations of a cascading assignment planner 300.

The processor 810, which may be any computer processor capable of performing the functions described herein, executes commands based on inputs received from a user and the data received from the interface 830. The data received from the interface 830 can include various data received for the cascading assignment planner 300 from various databases related to the problem space (e.g., a rules database 840, a preferences database 850, a roster database 860 identifying the resources and associated base-states thereof, an a tasks database 870 identifying the tasks and subtasks having resource requirements to be met by the resources) and output to a user or other computing device for further analysis.

The interface 830 connects the computing device 800 to external devices, such as, for example, external memory devices, external computing devices, a power source, a wireless transmitter, etc., and may include various connection ports (e.g., Universal Serial Bus (USB), Firewire, Ethernet, coaxial jacks) and cabling. The interface 830 is used to send and receive between computing devices 800 and to communicate assignments to end users and to receive inputs therefrom.

The memory 820 is a memory storage device that generally includes various processor-executable instructions, that when executed by the processor 810, perform the various functions related to combinatorial optimization as discussed herein. The processor-executable instructions may generally be described or organized into various "applications" or "modules" in the memory 820, although alternate implementations may have different functions and/or combinations of functions. The memory 820 also generally includes data structures that store information for use by or output by the various applications or modules. In the present disclosure, the memory 820 includes at least instructions for an operating system 821 and one or more application(s) 822. The memory 820 may be one or more memory devices, such as, for example, Random Access Memory (RAM), Read Only Memory (ROM), flash memory, or any other type of volatile or non-volatile storage medium that includes instructions that the processor 810 may execute.

When the computing device 800 provides the functionality of the combinatorial optimizer described herein, the memory 820 includes processor executable instructions to provide the functionalities thereof described in the present disclosure. In some examples, the memory 820 includes databases for locally caching data that include listings or databases that identify the resources, tasks, rule set, priority list, preferences, etc.

A further understanding of at least some of the examples of the present disclosure is provided with reference to the following numbered Clauses, in which:
Clause 1: A method, optionally a computer-implemented method, comprising: updating tentative vacancies for roles in an assignment plan; evaluating the assignment plan based on simulated bids for resources to fill the tentative vacancies; in response to determining that the simulated bids fulfill the assignment plan according to an assignment threshold, publishing the tentative vacancies as actual vacancies for actual bids; receiving actual bids from at least a portion of the resources; evaluating the assignment plan based on the actual bids; and in response to determining that the actual bids fulfill the assignment plan, publishing a update plan based on the actual bids as awarded to the resources.
Clause 2: The method as is described in Clause 1, wherein the tentative vacancies are a result of one or more of: an additional role being added to a pool of roles; and a resource leaving a pool of resources.
Clause 3: The method as is described in either of Clauses 1 or 2, wherein the assignment plan is evaluated based on a probabilistically generated set of simulated bids based on historically observed bidding patterns.
Clause 4: The method as is described in Clause 3, wherein the assignment plan is evaluated over several iterations, where the set of simulated bids is adjusted probabilistically for each iteration.
Clause 5: The method as is described in any of Clauses 1-4, wherein evaluating the assignment plan includes performing an award script that follows priority rules when awarding a vacancy between competing resources.
Clause 6: The method as is described in any of Clauses 1-5, before determining that the simulated bids fulfill the assignment plan, determining in an earlier iteration that the simulated bids do not fulfill the assignment plan, and in response to determining that the simulated bids in the earlier iteration do not fulfill the assignment plan: updating the tentative vacancies for the roles in the assignment plan based on the earlier iteration; and evaluating the assignment plan based on the simulated bids for resources to fill the tentative vacancies as updated.
Clause 7: The method as is described in any of Clauses 1-6, before determining that the actual bids fulfill the assignment plan, determining in an earlier iteration that the actual bids do not fulfill the assignment plan, and in response to determining that the actual bids in the earlier iteration do not fulfill the assignment plan: updating the assignment plan by removing at least one of the actual vacancies based on the earlier iteration; and evaluating the assignment plan based on the actual bids for resources to fill the actual vacancies as updated.
Clause 8: The method as is described in any of Clauses 1-7, wherein determining that the actual bids fulfill the assignment plan includes: identifying competing bids from at least two resources for a plurality of update paths; reading the competing bids for priority keys that identify preferences and priorities for associated resources of the at least two resources for individual update paths of the plurality of update paths; and determining an update order for the at least two resources via the update paths that respects the preferences and priorities associated with the priority keys.
Clause 9. The method of any of Clauses 1-8, wherein: the resources are computing resources in a data center; the roles are computing roles with associated computing tasks; and the method comprises assigning the computing resources in the data center.
Clause 10. The method of Clause 9, comprising reassigning the computing resources in the data center as the computer resources age, so that when an old or malfunctioning computer resource is taken offline, the newest, fastest, or most reliable computer resources are assigned for computing tasks with a highest priority level, while other computer resources are shifted to lower priority computing tasks.
Clause 11. The method of any of Clause 1-10 wherein: the resources are power generating units; the roles are roles of baseload power provision, peak demand supplemental power provision, load balancing power provision, and backup power provision; and the method comprises assigning power generating units to bring online or take offline.
Clause 12. A computer program comprising computer code that, when executed by a computer processor, cause the computer processor to perform the method of any of Clauses 1-11.
Clause 13. A computer-readable medium having stored thereon the computer program of Clause 12.
Clause 14. A computer system programmed to perform the method of any of Clauses 1-11.
Clause 15: A method, optionally a computer-implemented method, comprising: identifying competing bids from at least two resources for a plurality of update paths; reading the competing bids for priority keys that identify preferences and priorities for associated resources of the at least two resources for individual update paths of the plurality of update paths; determining an update order for the at least two resources via the update paths that respects the preferences and priorities associated with the priority keys; and releasing an update plan scheduled according to the update order.
Clause 16: The method as is described in Clause 15, wherein the competing bids are for a vacancy in a given role different from current roles that the at least two resources are currently assigned to.
Clause 17: The method as is described in either of Clauses 15 or 16, further comprising verifying that an order of reassignment from the current roles to the given role respects a priority order for the at least two resources.
Clause 18: The method as is described in any of Clauses 15-17, wherein the competing bids are for update-inputs for reassignment to a new role that the at least two resources are scheduled for reassignment to.
Clause 19: The method as is described in any of Clauses 15-18, wherein a first resource specifies a first priority and a second resource specifies a second priority, lower that the first priority, further comprising: applying an offset to the first priority for a subset of available times for reassignment; wherein the offset is set to one of: equal to a lowest priority among the at least two resources when the first resource remains viable for consideration for reassignment during the subset of available times but at a lower priority than the second resource; and equal to a priority threshold when the first resource is not viable for consideration for reassignment during the subset of available times.
Clause 20: The method as is described in any of Clauses 15-19, wherein: the resources are electrical generators.
Clause 21. The method of any of Clauses 15-20, wherein: the resources are computing resources in a data center; the roles are computing roles with associated computing tasks; and the method comprises assigning the computing resources in the data center.
Clause 22. The method of Clause 21, comprising reassigning the computing resources in the data center as the computer resources age, so that when an old or malfunctioning computer resource is taken offline, the newest, fastest, or most reliable computer resources are assigned for computing tasks with a highest priority level, while other computer resources are shifted to lower priority computing tasks.
Clause 23. The method of any of Clauses 15-22, wherein: the resources are power generating units; the roles are roles of baseload power provision, peak demand supplemental power provision, load balancing power provision, and backup power provision; and the method comprises assigning power generating units to bring online or take offline.
Clause 24. A computer program comprising computer code that, when executed by a computer processor, cause the computer processor to perform the method of any of Clauses 15-23.
Clause 25. A computer-readable medium having stored thereon the computer program of Clause 24.
Clause 26. A computer system programmed to perform the method of any of Clauses 15-23.
Clause 27: A method, optionally a computer-implemented method, comprising: determining an assignment plan that identifies vacancies or surpluses for roles; creating simulated bids for reassigning resources according to the assignment plan; running an award script based on the simulated bids to probabilistically assign a first portion of the resources to new roles of the roles using a priority scheme to resolve competition between the first portion of the resources for the new roles; in response to a first output of the award script satisfying a confidence threshold, finalizing the assignment plan; posting the vacancies for the new roles according to the finalized assignment plan; receiving actual bids from a second portion of the resources for the new roles; running the award script based on the actual bids to assign the second portion of the resources to the new roles for an update plan; and in response to a second output of the award script satisfying a release threshold, publishing the update plan.
Clause 28: The method as is described in Clause 27, further comprising, before the first output satisfies the confidence threshold, optimizing the assignment plan via multiple iterations of identifying the vacancies or the surpluses to include in the assignment plan based on previous creation of simulated bids and running of the award script.
Clause 29: The method as is described in any of Clauses 27 or 28, further comprising, before the second output satisfies the release threshold, optimizing the update plan via multiple iterations of running of the award script using the actual bids, wherein at least one vacancy of the vacancies or at least one surplus of the surpluses is removed for a subsequent iteration of running the award script.
Clause 30: The method as is described in any of Clauses 27-29, wherein the simulated bids are generated probabilistically based on historical bidding patterns for the resources in current roles for the new roles.
Clause 31: The method as is described in any of Clauses 27-30, wherein the surpluses for the new roles identify one or more roles to remove in the assignment plan.
Clause 32: The method as is described in any of Clauses 27-31, wherein running the award script identifies cascading vacancies when a first resource fills a first vacancy in a first new role and creates a second vacancy for a second resource to fill, and wherein the second vacancy is in an original role for the first resource and is a second new role for the second resource.
Clause 33. The method of any of Clauses 27-32, wherein: the resources are computing resources in a data center; the roles are computing roles with associated computing tasks; and the method comprises assigning the computing resources in the data center.
Clause 34. The method of Clause 33, comprising reassigning the computing resources in the data center as the computer resources age, so that when an old or malfunctioning computer resource is taken offline, the newest, fastest, or most reliable computer resources are assigned for computing tasks with a highest priority level, while other computer resources are shifted to lower priority computing tasks.
Clause 35. The method of any of Clauses 27-34, wherein: the resources are power generating units; the roles are roles of baseload power provision, peak demand supplemental power provision, load balancing power provision, and backup power provision; and the method comprises assigning power generating units to bring online or take offline.
Clause 36. A computer program comprising computer code that, when executed by a computer processor, cause the computer processor to perform the method of any of Clauses 27-35.
Clause 37. A computer-readable medium having stored thereon the computer program of Clause 36.
Clause 38. A computer system programmed to perform the method of any of Clauses 27-35.
Clause 39: A system, comprising: a memory storing computer-executable instructions; and a processor configured to execute the computer-executable instructions and cause the system to perform a method in accordance with any of Clauses 1-11, 15-23 or 27-35.
Clause 40: A non-transitory computer-readable medium comprising computer-executable instructions that, when executed by a processor of a computing system, cause the computing system to perform a method in accordance with any of Clauses 1-11, 15-23 or 27-35.
Clause 41: A computer program product embodied on a computer readable storage medium comprising code for performing a method in accordance with any of Clauses 1-11, 15-23 or 27-35.

In the current disclosure, reference is made to various examples. However, it should be understood that the present disclosure is not limited to specific described examples. Instead, any combination of the following features and elements, whether related to different examples or not, is contemplated to implement and practice the teachings provided herein. Additionally, when elements of the examples are described in the form of "at least one of A and B," it will be understood that examples including element A exclusively, including element B exclusively, and including element A and B are each contemplated. Furthermore, although some examples may achieve advantages over other possible solutions and/or over the prior art, whether or not a particular advantage is achieved by a given example is not limiting of the present disclosure. Thus, the examples, features, and advantages disclosed herein are merely illustrative and are not considered elements or limitations of the appended claims except where explicitly recited in a claim(s).

As will be appreciated by one skilled in the art, examples described herein may be embodied as a system, method or computer program product. Accordingly, examples may take the form of an entirely hardware example, an entirely software example (including firmware, resident software, micro-code, etc.) or an example combining software and hardware examples that may all generally be referred to herein as a "circuit," "module" or "system." Furthermore, examples described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for examples of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Examples of the present disclosure are described herein with reference to flowchart illustrations and/or block diagrams of methods, apparatuses (systems), and computer program products according to examples of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various examples of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to examples of the present disclosure, other and further examples of the disclosure may be devised without departing from the basic scope thereof, and the scope thereof is determined by the claims that follow.

## Claims

1. A method (200), comprising:
updating (210) tentative vacancies (130) for roles (120) in an assignment plan;
evaluating (220) the assignment plan based on simulated bids for resources (110) to fill the tentative vacancies;
in response to determining that the simulated bids fulfill the assignment plan according to an assignment threshold, publishing (230) the tentative vacancies as actual vacancies for actual bids;
receiving (240) actual bids from at least a portion of the resources;
evaluating (240) the assignment plan based on the actual bids; and
in response to determining that the actual bids fulfill the assignment plan, publishing an updated plan based on the actual bids as awarded to the resources.

2. The method of claim 1, wherein the tentative vacancies are a result of:
an additional role being added to a pool of roles; and/or
a resource leaving a pool of resources.

3. The method of claim 1 or 2, wherein the assignment plan is evaluated based on a probabilistically generated set of simulated bids based on historically observed bidding patterns.

4. The method of any of claims 1-3, wherein evaluating the assignment plan includes performing an award script that follows priority rules when awarding a vacancy between competing resources.

5. The method of any of claims 1-4, wherein the assignment plan is evaluated over several iterations, where the set of simulated bids is adjusted probabilistically for each iteration.

6. The method of claim 5, before determining that the simulated bids fulfill the assignment plan, determining in an earlier iteration that the simulated bids do not fulfill the assignment plan, and in response to determining that the simulated bids in the earlier iteration do not fulfill the assignment plan:
updating the tentative vacancies for the roles in the assignment plan based on the earlier iteration; and
evaluating the assignment plan based on the simulated bids for resources to fill the tentative vacancies as updated.

7. The method of claim 5 or 6, before determining that the actual bids fulfill the assignment plan, determining in an earlier iteration that the actual bids do not fulfill the assignment plan, and in response to determining that the actual bids in the earlier iteration do not fulfill the assignment plan:
updating the assignment plan by removing at least one of the actual vacancies based on the earlier iteration; and
evaluating the assignment plan based on the actual bids for resources to fill the actual vacancies as updated.

8. The method of any of claims 1-7, wherein determining that the actual bids fulfill the assignment plan includes:
identifying (710) competing bids from at least two resources (110) for a plurality of update paths (610);
reading (720) the competing bids for priority keys that identify preferences and priorities for associated resources of the at least two resources for individual update paths of the plurality of update paths; and
determining (730) an update order for the at least two resources via the update paths that respects the preferences and priorities associated with the priority keys.

9. The method of any of claims 1-8, further comprising implementing the updated plan.

10. The method of any of claims 1-9, wherein:
the resources are computing resources in a data center;
the roles are computing roles with associated computing tasks; and
the method comprises assigning the computing resources in the data center.

11. The method of claim 10, comprising reassigning the computing resources in the data center as the computer resources age, so that when an old or malfunctioning computer resource is taken offline, the newest, fastest, or most reliable computer resources are assigned for computing tasks with a highest priority level, while other computer resources are shifted to lower priority computing tasks.

12. The method of any of claims 1-10, wherein:
the resources are power generating units;
the roles are roles of baseload power provision, peak demand supplemental power provision, load balancing power provision, and backup power provision; and
the method comprises assigning power generating units to bring online or take offline.

13. A computer program comprising computer code that, when executed by a computer processor, cause the computer processor to perform the method of any of claims 1-12.

14. A computer-readable medium having stored thereon the computer program of claim 13.

15. A computer system programmed to perform the method of any of claims 1-12.
